# EUROPEAN PATENT APPLICATION

(11) **EP 4 845 081 A1**
(43) Date of publication of application: **25.11.2026**
(21) Application number: 25757569.6
(22) Date of filing: 14.01.2025
(51) Int. Cl.: H04L 5/00, H04W 64/00

(54) **COMMUNICATION METHOD AND RELATED APPARATUS**

(30) Priority: 23.02.2024 CN 202410204259
(71) Applicant: Huawei Technologies Co., Ltd., Shenzhen, Guangdong 518129 (CN)
(72) Inventor: TIAN, Yuan, Shenzhen, Guangdong 518129 (CN); YU, Guangwei, Shenzhen, Guangdong 518129 (CN); WEI, Chuanjie, Shenzhen, Guangdong 518129 (CN)
(74) Representative: MERH-IP Matias Erny Reichl Hoffmann Patentanwälte PartG mbB
(86) International application number: PCT/CN2025/072354
(87) International publication number: WO 2025/175972

(57) **Abstract**

This application provides a communication method and a related apparatus to address delay differences and phase differences between a plurality of carriers used for sending reference signals, thereby enabling more accurate channel information to be obtained. The method includes: A terminal device generates an uplink reference signal and sends the uplink reference signal to a network device on N first carriers, where at least two of the N first carriers meet the following: a delay difference is less than or equal to a first preset value, and/or a phase difference is less than or equal to a second preset value, where N is an integer greater than 1. Correspondingly, the network device receives the uplink reference signal on the N first carriers and measures the uplink reference signal to obtain channel information.

## Description

This application claims priority to Chinese Patent Application No. 202410204259.1, filed with the China National Intellectual Property Administration on February 23, 2024 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

In mobile communication systems, if the network side needs to obtain more accurate channel information, a terminal device must send a reference signal with a wider bandwidth. In other words, a wider bandwidth of a reference signal results in more accurate channel information obtained by the network side based on the reference signal; and on the contrary, a narrower bandwidth of a reference signal results in a larger deviation of channel information obtained by the network side based on the reference signal.

However, the bandwidth of a single carrier is limited by communication protocols. Therefore, to transmit a reference signal with a wide bandwidth, a plurality of carriers need to be aggregated to achieve the required bandwidth. Nevertheless, directly transmitting a reference signal over a wider bandwidth may fail to realize the benefits of multi-carrier aggregation, thereby preventing the acquisition of more accurate channel information.

### SUMMARY

This application provides a communication method and a related apparatus to obtain more accurate channel information.

According to a first aspect, this application provides a communication method. The method may be applied to a communication apparatus. For example, the communication apparatus may be a terminal device, may be a component (for example, a chip or a chip system) configured in the terminal device, or may be a logical module or software that can implement all or some functions of the terminal device. This is not limited in this application. For ease of understanding and description, the following describes the method by using an example in which the communication apparatus is a terminal device.

For example, the method includes: generating an uplink reference signal; and sending the uplink reference signal to a network device on N first carriers, where at least two of the N first carriers meet the following: a delay difference is less than or equal to a first preset value, and/or a phase difference is less than or equal to a second preset value, where N is an integer greater than 1.

The first preset value is a maximum delay difference between carriers that can be accepted by a network during multi-carrier synchronization. In other words, in a multi-carrier synchronization scenario, if a delay difference between a plurality of carriers is within an error range indicated by the first preset value, performance of multi-carrier synchronization is not greatly affected. Similarly, the second preset value is a maximum phase difference between carriers that can be accepted by the network during multi-carrier synchronization. In other words, in the multi-carrier synchronization scenario, if a phase difference between the plurality of carriers is within an error range indicated by the second preset value, performance of multi-carrier synchronization is not greatly affected.

Based on this solution, the terminal device sends the uplink reference signal on a plurality of carriers including at least two carriers between which a delay difference is less than the first preset value and/or a phase difference is less than the second preset value. In this way, it can be ensured that the plurality of carriers for sending the uplink reference signal have a small delay difference and/or phase difference on a terminal device side. In other words, the problem of delay differences and/or phase differences in multi-carrier aggregation is resolved at the source of reference signal sending. Compared with a manner of estimating and compensating for, on a network device side, delays and/or phases of the plurality of carriers corresponding to the received uplink reference signal, in this solution, a gain of multi-carrier aggregation can be better obtained, and more accurate channel information can be obtained.

With reference to the first aspect, in some implementations of the first aspect, the method further includes: receiving a downlink reference signal from the network device on M second carriers, where the M second carriers include N second carriers, and M is an integer greater than or equal to N; obtaining N measurement results corresponding to the N second carriers, where each of the N measurement results includes a time domain offset and a frequency domain offset; determining delays of the N second carriers based on N time domain offsets; and determining phases of the N second carriers based on N frequency domain offsets.

For example, the terminal device may obtain, in the following two manners, the N measurement results corresponding to the N second carriers:
Manner 1: The terminal device measures downlink reference signals received on the M second carriers to obtain M measurement results; and determines, in the M measurement results, the N measurement results corresponding to the N second carriers.
Manner 2: The terminal device measures downlink reference signals received on the N second carriers to obtain the N measurement results, where the N second carriers belong to the M second carriers.

A method for obtaining the N measurement results based on the manner 2 can reduce calculation complexity of the terminal device.

The time domain offset in this application is a difference between time at which the terminal device receives a downlink reference signal and time at which the network device sends the downlink reference signal, and the difference is a delay of a second carrier that carries the downlink reference signal.

The frequency domain offset in this application is a difference between a frequency at which the terminal device receives a downlink reference signal and a frequency at which the network device sends the downlink reference signal, and a phase of a second carrier that carries the downlink reference signal may be obtained by integrating the difference.

It may be understood that the terminal device may obtain the N time domain offsets and the N frequency domain offsets based on the N measurement results. Because the N measurement results correspond to the N carriers, the terminal device may obtain a correspondence between the N time domain offsets and the N carriers, and a correspondence between the N frequency domain offsets and the N carriers.

For example, determining the delays of the N second carriers based on the N time domain offsets includes: determining, based on the correspondence between the N time domain offsets and the N carriers, a time domain offset corresponding to each of the N carriers; and determining the time domain offset corresponding to each carrier as a delay of each carrier.

Similarly, determining the phases of the N second carriers based on the N frequency domain offsets includes: determining, based on the correspondence between the N frequency domain offsets and the N carriers, a frequency domain offset corresponding to each of the N carriers; and integrating the frequency domain offset corresponding to each carrier to obtain a phase of each carrier.

With reference to the first aspect, in some implementations of the first aspect, a delay difference between at least one of the at least two first carriers and a reference carrier is less than or equal to the first preset value, and a phase difference between the at least one of the at least two first carriers and the reference carrier is less than or equal to the second preset value.

The reference carrier is one of the M second carriers. Therefore, the reference carrier may belong to the N second carriers, or may not belong to the N second carriers.

With reference to the first aspect, in some implementations of the first aspect, the method further includes: receiving first information from the network device, where the first information indicates the reference carrier.

Optionally, the first information may be carried in radio resource control (radio resource control, RRC) signaling or physical layer signaling.

With reference to the first aspect, in some implementations of the first aspect, the method further includes: obtaining a delay and a phase of the reference carrier based on the first information.

For example, when the reference signal belongs to the N second carriers, and the terminal device has obtained the delays and the phases of the N second carriers, the terminal device may directly obtain, based on the first information, the delay of the reference carrier from the obtained delays of the N second carriers, and the phase of the reference carrier from the obtained phases of the N second carriers.

For example, when the reference carrier belongs to the N second carriers, but the terminal device has not obtained the delays and the phases of the N second carriers (or when the reference signal does not belong to the N second carriers), the terminal device may measure, based on the first information, a downlink reference signal received on the reference carrier, to obtain a measurement result, then determine the delay of the reference signal based on a time domain offset included in the obtained measurement result, and determine the phase of the reference signal based on a frequency domain offset included in the obtained measurement result.

With reference to the first aspect, in some implementations of the first aspect, the method further includes: receiving second information from the network device, where the second information indicates P second carriers, the P second carriers are used by the terminal device to send a signal, and P is an integer greater than or equal to M. The P second carriers include the M second carriers.

That the P second carriers include the M second carriers means that the network device may send a downlink reference signal on the M second carriers in the P indicated second carriers.

For example, the P carriers may be indicated by using P transmission configuration indicators (transmission configuration indicators, TCIs). For example, the network device sends the P TCIs to the terminal device by using RRC signaling.

Optionally, the second information may be carried in RRC signaling.

With reference to the first aspect, in some implementations of the first aspect, sending on the N first carriers is performed simultaneously or in a time-division manner.

Simultaneous sending means that N time domain resources corresponding to the N first carriers are the same, and time-division sending means that the N time domain resources corresponding to the N first carriers are different.

According to a second aspect, this application provides a communication method. The method may be applied to a communication apparatus. For example, the communication apparatus may be a network device, may be a component (for example, a chip or a chip system) configured in the network device, or may be a logical module or software that can implement all or some functions of the network device. This is not limited in this application. For ease of understanding and description, the following describes the method by using an example in which the communication apparatus is a network device.

For example, the method includes: receiving an uplink reference signal from a terminal device on N first carriers, where at least two of the N first carriers meet the following: a delay difference is less than or equal to a first preset value, and/or a phase difference is less than or equal to a second preset value, where N is an integer greater than 1; and measuring the uplink reference signal to obtain channel information.

For descriptions of the first preset value and the second preset value, refer to the descriptions in the first aspect. Details are not described herein again.

Based on this solution, the network device receives a reference signal sent by the terminal device on a plurality of carriers including at least two carriers between which a delay difference is less than the first preset value and/or a phase difference is less than the second preset value, and measures the received reference signal. In the method, delays and phases of the plurality of carriers corresponding to the received uplink reference signal do not need to be estimated and compensated for. In this way, the problem of delay differences and phase differences in multi-carrier aggregation is resolved at the source (that is, a terminal device side) of reference signal sending. Compared with a manner of estimating and compensating for, on a network device side, the delays and the phases of the plurality of carriers corresponding to the received uplink reference signal, in this solution, a gain of multi-carrier aggregation can be better obtained, and more accurate channel information can be obtained.

With reference to the second aspect, in some implementations of the second aspect, the method further includes: sending a downlink reference signal to the terminal device on M second carriers, where the M second carriers include N second carriers, and M is an integer greater than or equal to N.

It may be understood that a delay difference between the M second carriers used by the network device to send the downlink reference signal may be greater than the first preset value, and a phase difference between the M second carriers may also be greater than the second preset value.

With reference to the second aspect, in some implementations of the second aspect, a delay difference between at least one of the at least two first carriers and a reference carrier is less than or equal to the first preset value, and a phase difference between the at least one of the at least two first carriers and the reference carrier is less than or equal to the second preset value, where the reference carrier is one of the M second carriers.

For descriptions of the reference signal, refer to the descriptions in the first aspect. Details are not described herein again.

With reference to the second aspect, in some implementations of the second aspect, the method further includes: sending first information to the terminal device, where the first information indicates the reference carrier.

Optionally, the first information may be carried in RRC signaling or physical layer signaling.

With reference to the second aspect, in some implementations of the second aspect, the method further includes: sending second information to the terminal device, where the second information indicates P second carriers, the P second carriers are used by the terminal device to send a signal, and P is an integer greater than 1. The P second carriers include the M second carriers.

For descriptions of the second information and the P second carriers, refer to the descriptions in the first aspect. Details are not described herein again.

With reference to the second aspect, in some implementations of the second aspect, receiving on the N first carriers is performed simultaneously or in a time-division manner.

Simultaneous receiving means that N time domain resources corresponding to the N first carriers are the same, and time-division receiving means that the N time domain resources corresponding to the N first carriers are different.

With reference to the first aspect and the second aspect, in some implementations, the N first carriers are obtained by adjusting delays and/or phases of the N second carriers.

The delays and the phases of the N second carriers may be obtained by the terminal device through measurement. For example, the terminal device may obtain the delays and the phases of the N second carriers by measuring the downlink reference signal received on the N second carriers.

It may be understood that, in a process of adjusting the delays and/or the phases of the N second carriers, the terminal device may use delays and phases of n (n is an integer greater than 0 and less than N) second carriers in the N second carriers as a reference to adjust a delay and/or a phase of a remaining second carrier in the N second carriers, to obtain the N first carriers; or may use delays and phases of m (m is an integer greater than 0 and less than N) carriers other than the N second carriers as a reference to adjust the delays and the phases of the N second carriers, to obtain the N first carriers.

It may be further understood that, in a process of adjusting the N second carriers, at least two second carriers are adjusted based on a same carrier in the n second carriers (or the m other carriers).

With reference to the first aspect and the second aspect, in some implementations, any two of the N first carriers meet the following: a delay difference is less than or equal to the first preset value, and/or a phase difference is less than or equal to the second preset value.

Based on this, the delay difference between any two of the N first carriers is less than or equal to the first preset value, and/or the phase difference between any two of the N first carriers is less than or equal to the second preset value. Compared with a case in which a delay difference between at least two of the N first carriers is less than or equal to the first preset value and/or a phase difference between the at least two of the N first carriers is less than or equal to the second preset value, in this solution, a gain of multi-carrier aggregation can be better obtained, and more accurate channel information can be obtained.

According to a third aspect, this application provides a communication apparatus. The communication apparatus includes a module or a unit configured to implement the method according to any one of the foregoing aspects and the possible implementations of the foregoing aspects. It should be understood that each module or unit may implement a corresponding function by executing a computer program.

According to a fourth aspect, this application provides a communication apparatus. The communication apparatus includes a processor, and the processor is configured to perform the method according to any one of the foregoing aspects and the possible implementations of the foregoing aspects.

The apparatus may further include a memory, configured to store instructions and data. The memory is coupled to the processor. When the processor executes the instructions stored in the memory, the method described in the foregoing aspects may be implemented.

The apparatus may further include a communication interface. The communication interface is used by the apparatus to communicate with another device. For example, the communication interface may be a transceiver, a circuit, a bus, a module, or another type of communication interface.

According to a fifth aspect, this application provides a chip system. The chip system includes at least one processor, configured to support implementation of functions according to any one of the foregoing aspects and the possible implementations of the foregoing aspects, for example, receiving or processing of data and/or information in the foregoing method.

In a possible design, the chip system further includes a memory, the memory is configured to store program instructions and data, and the memory is located inside or outside the processor.

The chip system may include a chip, or may include a chip and another discrete component.

According to a sixth aspect, this application provides a computer-readable storage medium. The computer-readable storage medium includes a computer program. When the computer program is run on a computer, the computer is enabled to implement the method according to any one of the foregoing aspects and the possible implementations of the foregoing aspects.

According to a seventh aspect, this application provides a computer program product. The computer program product includes a computer program (which may also be referred to as code or instructions). When the computer program is run, a computer is enabled to perform the method according to any one of the foregoing aspects and the possible implementations of the foregoing aspects.

According to an eighth aspect, this application provides a communication system. The communication system includes the foregoing terminal device and network device. The terminal device is configured to perform the method according to any one of the first aspect and the possible implementations of the first aspect, and the network device is configured to perform the method according to any one of the second aspect and the possible implementations of the second aspect.

It should be understood that the third aspect to the eighth aspect of this application correspond to the technical solutions of the first aspect or the second aspect of this application, and beneficial effect achieved in the aspects and corresponding feasible implementations are similar. Details are not described again.

### BRIEF DESCRIPTION OF DRAWINGS

FIG. 1 is a diagram of an architecture of a communication system applicable to a method according to an embodiment of this application;
FIG. 2 is a diagram of a delay difference and a phase difference between a plurality of carriers;
FIG. 3 is a diagram of changes of a delay and power of a channel based on air interface multipath estimation;
FIG. 4 is a schematic flowchart of a communication method according to an embodiment of this application;
FIG. 5a and FIG. 5b are diagrams of comparison between N first carriers and N second carriers according to an embodiment of this application;
FIG. 6 is a block diagram of an apparatus according to an embodiment of this application;
FIG. 7 is another block diagram of an apparatus according to an embodiment of this application;
FIG. 8 is a diagram of a structure of a terminal device according to an embodiment of this application; and
FIG. 9 is a diagram of a structure of a radio access network device according to an embodiment of this application.

### DESCRIPTION OF EMBODIMENTS

The following describes technical solutions of this application with reference to accompanying drawings.

For ease of understanding embodiments of this application, the following descriptions are first provided.

First, in embodiments of this application, prefix words such as "first" and "second" are merely used for ease of distinguishing and describing different things belonging to a same name category, and are not intended to limit a sequence, sizes, or a quantity of things. For example, a "first preset value" and a "second preset value" are merely different preset values, and have no time sequence relationship, magnitude relationship, or priority relationship.

Second, "sending" and "receiving" in embodiments of this application indicate signal transfer directions. Communication between different devices in embodiments of this application may be direct communication between different devices (that is, no relaying or forwarding by another device is required), may be communication between different devices through another device (that is, relaying or forwarding by the another device is required), or may be communication between a functional unit in a device and another device through another functional unit. In other words, "sending an uplink reference signal to a network device" in this application may be understood as that a destination end of the reference signal is the network device, and may include directly or indirectly sending information to the network device; and "receiving first information from a network device" may be understood as that a source end of the first information is the network device, and may include directly or indirectly receiving the information from the network device. Information may undergo necessary processing, for example, a format change, digital-to-analog conversion, amplification, and filtering, between a source end and a destination end of information sending. However, the destination end may understand valid information from the source end. Similar expressions in this application may be understood similarly, and details are not described herein again.

Third, in embodiments of this application, "at least one" means one or more, and "a plurality of" means two or more. "And/or" describes an association relationship between associated objects and represents that three relationships may exist. For example, A and/or B may represent the following cases: Only A exists, both A and B exist, and only B exists, where A and B may be singular or plural. The character "/" usually indicates an "or" relationship between associated objects, but does not exclude a case of an "and" relationship between the associated objects. A specific meaning represented by the character "/" may be understood with reference to the context. "At least one of the following items (pieces)" or a similar expression thereof refers to any combination of these items, including any combination of singular items (pieces) or plural items (pieces). For example, at least one of a, b, or c may represent a, b, c, a and b, a and c, b and c, or a, b, and c. a, b, and c may be singular or plural.

Fourth, in embodiments of this application, an "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, by directly indicating the to-be-indicated information, for example, indicating the to-be-indicated information or an index of the to-be-indicated information. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may be indicated based on an arrangement sequence of pieces of information that is pre-agreed on (for example, predefined in a protocol), to reduce indication overheads to some extent. A specific indication manner is not limited in this application.

It may be understood that, for a sender of the indication information, the indication information may indicate the to-be-indicated information, and for a receiver of the indication information, the indication information may be used to determine the to-be-indicated information.

Fifth, in embodiments of this application, descriptions such as "when", "in a case of", and "if" all mean that a device (for example, a network device or a terminal device) performs corresponding processing in an objective situation, are not intended to limit time, do not require the device (for example, a network device or a terminal device) to necessarily perform a determining action during implementation, and do not mean another limitation.

Sixth, predefinition in this application may be understood as definition, definition in advance, storage, pre-storage, pre-negotiation, pre-configuration, fixation, or pre-programming.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a sidelink (sidelink, SL) communication system, a worldwide interoperability for microwave access (worldwide interoperability for microwave access, WiMAX) communication system, a 5th generation (5th generation, 5G) mobile communication system or a new radio access technology (new radio access technology, NR) system, and a satellite communication system. The 5G mobile communication system may include a non-standalone (non-standalone, NSA) system and/or a standalone (standalone, SA) system.

The technical solutions provided in this application may be further applied to a future communication system, for example, a 6th generation (6th generation, 6G) mobile communication system. This is not limited in this application.

A network device in this application may be a radio access network (radio access network, RAN) device, and the RAN device is a device having a wireless transceiver function. The radio access network device may provide a wireless communication function service, and may connect a terminal device to a wireless network. The radio access network device may be a node in a radio access network, and is briefly referred to as a RAN node.

In a possible scenario, the RAN node may be a base station (base station, BS), an evolved NodeB (evolved NodeB, eNodeB), a transmission reception point (transmission reception point, TRP), a home base station (home evolved NodeB or home NodeB, HNB), an access point (access point, AP) of wireless fidelity (wireless fidelity, Wi-Fi), a mobile switching center, a next generation NodeB (next generation NodeB, gNB) in a 5G mobile communication system, a next generation base station in a 6G mobile communication system, a base station in a future mobile communication system, or the like.

Alternatively, the RAN node may be a device that functions as a base station in a device-to-device (device-to-device, D2D) communication system, a vehicle-to-everything (vehicle-to-everything, V2X) communication system, a machine-to-machine (machine-to-machine, M2M) communication system, an internet of things (internet to things, IoT) communication system, or the like. Alternatively, the RAN node may be a RAN node in a non-terrestrial network (non-terrestrial network, NTN). In other words, the RAN node may be deployed on a high-altitude platform or a satellite. The RAN node may be a macro base station, may be a micro base station or an indoor station, may be a relay node, a donor node, or the like, or may be a radio controller in a cloud radio access network (cloud radio access network, CRAN) scenario, a node in an open radio access network (open radio access network, O-RAN or ORAN) scenario, or the like. Optionally, the RAN node may alternatively be a server, a wearable device, a vehicle, a vehicle-mounted device, or the like. For example, a RAN node in a V2X technology may be a roadside unit (roadside unit, RSU). Certainly, the RAN node may alternatively be a node in a core network.

In another possible scenario, a plurality of RAN nodes coordinate to assist the terminal device in implementing wireless access, and different RAN nodes each implement a part of functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an open CU (O-CU), the DU may also be referred to as an open DU (O-DU), the CU-CP may also be referred to as an open CU-CP (O-CU-CP), the CU-UP may also be referred to as an open CU-UP (O-CU-UP), and the RU may also be referred to as an open RU (O-RU).

Any one of the CU (or the CU-CP and the CU-UP), the DU, and the RU may be implemented by using a software module, a hardware module, or a combination of a software module and a hardware module. In other words, the radio access network device in this application may be a virtualized device, for example, implemented by using general-purpose hardware and an instantiated virtualized function, or by using dedicated hardware and an instantiated virtualized function. The general-purpose hardware may be a server, for example, a cloud server.

A terminal device in this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device that has a wireless connection function. Currently, some examples of the terminal device may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), an uncrewed aerial vehicle, a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal device in a 5G network, and a terminal device in a future evolved public land mobile network (public land mobile network, PLMN).

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus only on one type of application function and need to be used together with other devices such as smartphones, for example, various smart bands or smart jewelry for monitoring physical signs.

In addition, the terminal device may alternatively be a terminal device in an IoT system. IoT is an important component in future development of information technology. A main technical feature of IoT is to connect an object to a network by using a communication technology, to implement an intelligent network of human-machine interconnection and thing-thing interconnection. An IoT technology can achieve massive connections, deep coverage, and terminal power saving by using, for example, a narrowband (narrowband, NB) technology.

The terminal device may alternatively include sensors such as an intelligent printer, a train detector, and a gas station, and main functions include: collecting data (by some terminal devices), receiving control information and downlink data from a network device, sending an electromagnetic wave, and transmitting uplink data to the network device.

The terminal device in this application may be a virtualized device, for example, implemented by using general-purpose hardware and an instantiated virtualized function, or by using dedicated hardware and an instantiated virtualized function. The general-purpose hardware may be a server, for example, a cloud server.

It should be understood that both a specific form of the radio access network device and a specific form of the terminal device are not limited in this application.

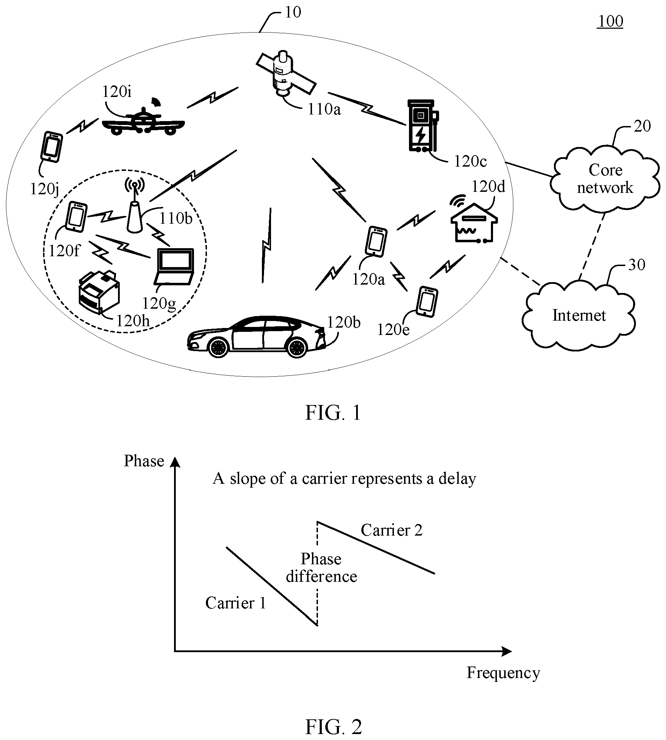

FIG. 1 is a diagram of an architecture of a communication system 100 applicable to a method according to an embodiment of this application. As shown in FIG. 1, the communication system 100 includes a radio access network 10 and a core network 20. Optionally, the communication system 100 may further include an internet 30. The radio access network 10 may include at least one radio access network device (for example, 110a and 110b in FIG. 1), and may further include at least one terminal device (for example, 120a to 120j in FIG. 1).

The terminal device may be connected to the radio access network device in a wireless manner, and the radio access network device may be connected to the core network in a wireless or wired manner. A core network device and the radio access network device may be independent and different physical devices, or functions of the core network device and logical functions of the radio access network device may be integrated into a same physical device, or some functions of the core network device and some functions of the radio access network device may be integrated into one physical device. Terminal devices may be connected to each other in a wired or wireless manner, and radio access network devices may be connected to each other in a wired or wireless manner.

Communication between a radio access network device and a terminal device, between radio access network devices, or between terminal devices may be performed through a licensed spectrum, may be performed through an unlicensed spectrum, or may be performed through both a licensed spectrum and an unlicensed spectrum. Communication may be performed through a spectrum below 6 gigahertz (gigahertz, GHz), may be performed through a spectrum above 6 GHz, or may be performed through both a spectrum below 6 GHz and a spectrum above 6 GHz. A spectrum resource used for wireless communication is not limited in embodiments of this application.

The radio access network device may be a base station deployed in the air, for example, may be a satellite base station 110a; or may be a base station deployed indoors, for example, may be a micro base station or indoor station 110b.

The terminal device may be a terminal device deployed in the air, for example, a helicopter or uncrewed aerial vehicle 120i in FIG. 1; or may be a terminal deployed on the ground, for example, a mobile phone 120a, a mobile phone 120e, a mobile phone 120f, a mobile phone 120j, a vehicle 120b, a computer 120g, or a printer 120h in FIG. 1.

The radio access network device and the terminal device may be at fixed locations, or may be movable. For example, the radio access network device and the terminal may be deployed on land, where the deployment includes indoor or outdoor, and handheld or vehicle-mounted deployment; may be deployed on water; or may be deployed on an airplane, a balloon, or an artificial satellite in the air.

Roles of the radio access network device and the terminal device may be relative. For example, the helicopter or uncrewed aerial vehicle 120i in FIG. 1 may be configured as a mobile base station. For 120j that accesses the radio access network 10 through 120i, 120i is a base station, while for 110a, 120i is a terminal. In other words, 110a and 120i communicate with each other according to a wireless air interface protocol. Certainly, 110a and 120i may alternatively communicate with each other according to an interface protocol between radio access network devices. In this case, for 110a, 120i is also a base station. Therefore, both the radio access network device and the terminal device may be collectively referred to as communication devices. 110a, 110b, and 120a to 120j in FIG. 1 may be referred to as communication devices having respective corresponding functions, for example, a communication device having a base station function or a communication device having a terminal function.

It should be understood that, FIG. 1 is merely a diagram. The communication system may further include other devices, for example, may further include a wireless relay device and a wireless backhaul device, which are not shown in FIG. 1.

In a mobile communication system, if a network device needs to obtain more accurate channel information, a terminal device needs to send a reference signal with a wider bandwidth. In other words, a wider bandwidth of a reference signal sent by the terminal device indicates more accurate channel information obtained by the network device based on the reference signal; and on the contrary, a narrower bandwidth of a reference signal sent by the terminal device indicates a larger deviation of channel information obtained by the network device based on the reference signal. However, a bandwidth of a single carrier of the reference signal is limited by a communication protocol. As a result, the terminal device and the network device cannot customize a carrier with a wider bandwidth to send the reference signal. Therefore, if a reference signal needs to be sent by using a wider bandwidth, a bandwidth needs to be expanded in a manner of aggregating a plurality of carriers.

However, in the mobile communication system, different carriers may have different delays and phases (as shown in FIG. 2). Therefore, when the bandwidth of the reference signal is expanded in the multi-carrier aggregation manner, the problem of delay differences and phase differences between the plurality of carriers used for reference signal sending needs to be first resolved. Otherwise, it is difficult to obtain benefits brought by multi-carrier aggregation.

Currently, to obtain the benefits brought by multi-carrier aggregation, after the terminal device sends reference signals of the plurality of carriers to the network device, the network device estimates and compensates for the delay difference and the phase difference between the plurality of carriers, so that there is almost no delay difference and phase difference between the plurality of carriers after compensation. Then, the network device performs channel estimation by using a signal carried on the carriers after compensation. However, because the reference signal sent by the terminal device is affected by an air interface multipath channel, it is difficult for the network device to accurately estimate a delay and a phase of each carrier for sending the reference signal, and therefore an accurate delay difference and phase difference between the plurality of carriers cannot be obtained. Consequently, an accurate channel estimation result cannot be obtained.

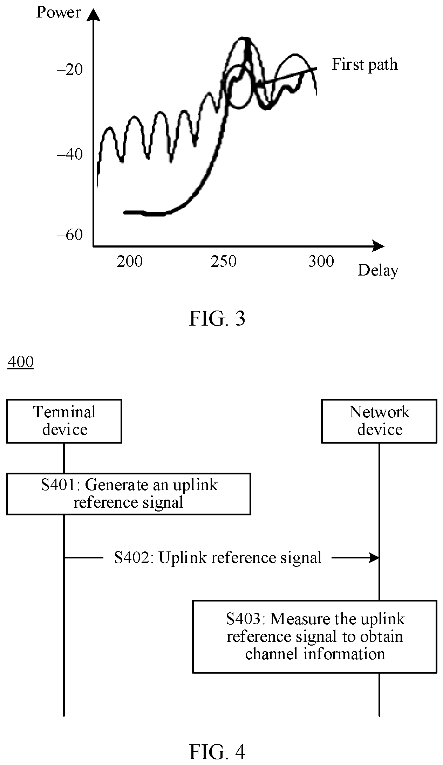

For example, in a manner in which the network device estimates the delay and the phase of the carrier by estimating a first path of the air interface, the network device easily misses the first path shown in FIG. 3. If the first path is missed, an estimation result of the delay and the phase of the carrier by the network device is greatly affected. Consequently, the network device cannot obtain an actual delay difference and phase difference between the plurality of carriers, and cannot accurately perform compensation on the plurality of carriers for sending the reference signal.

In view of this, embodiments of this application provide a communication method and a related apparatus. In the method, delays and phases of a plurality of carriers for sending a reference signal are adjusted at the source (namely, a transmit end) of reference signal sending, so that a delay difference and a phase difference between the plurality of carriers after adjustment fall within preset error ranges, and the reference signal is sent on the plurality of carriers after adjustment. In this manner of compensating for the delay difference and the phase difference between the plurality of carriers at the source of reference signal sending, a problem that a large error exists when a receive end estimates the delays and the phases of the plurality of carriers is effectively avoided, benefits of multi-carrier aggregation can be better obtained, and more accurate channel information can be obtained.

With reference to FIG. 4, the following describes in detail the communication method provided in embodiments of this application. The method provided in embodiments of this application may be applied to the communication system shown in FIG. 1, but embodiments of this application are not limited thereto.

In a flowchart shown in FIG. 4, the method is shown from a perspective of interaction between a terminal device and a network device. However, an execution body of the method is not limited in this application. For example, the terminal device in FIG. 4 may be replaced with a chip, a chip system, or a processor that supports the terminal device in implementing the method, or may be a logical module or software that can implement all or some functions of the terminal device; and the network device in FIG. 4 may be replaced with a chip, a chip system, or a processor that supports the network device in implementing the method, or may be a logical module or software that can implement all or some functions of the network device.

FIG. 4 is a schematic flowchart of a communication method 400 according to an embodiment of this application. As shown in FIG. 4, the method 400 may include S401 to S403. The following describes in detail the steps in the method 400.

S401: A terminal device generates an uplink signal.

The uplink reference signal in this application may be a demodulation reference signal (demodulation reference signal, DMRS), a phase tracking reference signal (phase tracking reference signal, PTRS), a sounding reference signal (sounding reference signal, SRS), a positioning reference signal (positioning reference signal, PRS), or another reference signal. The DMRS may include a physical uplink shared channel (physical uplink shared channel, PUSCH) reference signal and a physical uplink control channel (physical uplink control channel, PUCCH) reference signal.

S402: The terminal device sends the uplink reference signal to a network device on N first carriers, where N is an integer greater than 1. Correspondingly, the network device receives the uplink reference signal from the terminal device on the N first carriers.

At least two of the N first carriers meet the following: a delay difference is less than or equal to a first preset value, and/or a phase difference is less than or equal to a second preset value.

The first preset value is a maximum delay difference between carriers that can be accepted by a network during multi-carrier synchronization. In other words, in a multi-carrier synchronization scenario, if a delay difference between a plurality of carriers is within an error range indicated by the first preset value, performance of multi-carrier synchronization is not greatly affected.

The first preset value may be 3 nanoseconds (nanoseconds, ns) or another value. This is not limited in this application.

Similarly, the second preset value is a maximum phase difference between carriers that can be accepted by the network during multi-carrier synchronization. In other words, in the multi-carrier synchronization scenario, if a phase difference between the plurality of carriers is within an error range indicated by the second preset value, performance of multi-carrier synchronization is not greatly affected.

The second preset value may be 3 degrees (°) or another value. This is not limited in this application.

S403: The network device measures the uplink reference signal to obtain channel information. The channel information may also be replaced with channel state information.

For the process, refer to the descriptions in the conventional technology. Details are not described herein.

In this embodiment of this application, the terminal device sends the reference signal on a plurality of carriers including at least two carriers between which a delay difference is less than the first preset value and/or a phase difference is less than the second preset value. In this way, it can be ensured that the plurality of carriers for sending the uplink reference signal have a small delay difference and/or phase difference on a terminal device side. In other words, the problem of delay differences and/or phase differences between a plurality of carriers is resolved at the source of reference signal sending. Compared with a manner of estimating and compensating for, on a network device side, the delay difference and/or the phase difference between the plurality of carriers used to carry the uplink reference signal, in this solution, a gain of multi-carrier aggregation can be better obtained, and more accurate channel information can be obtained.

Optionally, sending on the N first carriers may be performed simultaneously or in a time-division manner.

Simultaneous sending means that N time domain resources corresponding to the N first carriers are the same, and time-division sending means that the N time domain resources corresponding to the N first carriers are different.

Optionally, any two of the N first carriers meet the following: a delay difference is less than or equal to the first preset value, and/or a phase difference is less than or equal to the second preset value.

For descriptions of the first preset value and the second preset value, refer to the descriptions in S402. Details are not described herein again.

Based on this, the delay difference between any two of the N first carriers is less than or equal to the first preset value, and/or the phase difference between any two of the N first carriers is less than or equal to the second preset value. Compared with a case in which a delay difference between at least two of the N first carriers is less than or equal to the first preset value and/or a phase difference between the at least two of the N first carriers is less than or equal to the second preset value, in this solution, a gain of multi-carrier aggregation can be better obtained, and more accurate channel information can be obtained.

Optionally, the N first carriers are obtained by adjusting delays and/or phases of N second carriers.

The delays and the phases of the N second carriers may be obtained by the terminal device through measurement. For example, the terminal device may obtain the delays and the phases of the N second carriers by measuring the downlink reference signal received on the N second carriers.

It may be understood that, in a process of adjusting the delays and/or the phases of the N second carriers, the terminal device may use delays and phases of n (n is an integer greater than 0 and less than N) second carriers in the N second carriers as a reference to adjust delays and/or phases of remaining second carriers in the N second carriers, to obtain the N first carriers; or may use delays and phases of m (m is an integer greater than 0 and less than N) carriers other than the N second carriers as a reference to adjust the delays and the phases of the N second carriers, to obtain the N first carriers.

It should be noted that, in a process of adjusting the N second carriers, at least two second carriers are adjusted based on a same carrier in the n second carriers (or the m other carriers). For example, three obtained first carriers include a first carrier #1, a first carrier #2, and a first carrier #3. A delay difference between the first carrier #1 and the first carrier #2 is less than or equal to the first preset value, and a phase difference between the first carrier #1 and the first carrier #2 is less than or equal to the second preset value. The first carrier #1 may be a second carrier #1 in the n second carriers; or a delay difference between the first carrier #1 and a second carrier #1 in the n second carriers is less than or equal to the first preset value, and a phase difference between the first carrier #1 and the second carrier #1 in the n second carriers is less than or equal to the second preset value. The first carrier #3 may be a second carrier #2 in the n second carriers; or a delay difference between the first carrier #3 and a second carrier #2 in the n second carriers is less than or equal to the first preset value, and a phase difference between the first carrier #3 and the second carrier #2 in the n second carriers is less than or equal to the second preset value. In other words, in the three first carriers, two first carriers are obtained through adjustment based on the same second carrier #1, and one first carrier is obtained through adjustment based on the second carrier #2 different from the second carrier #1.

In the foregoing adjustment process, specific carriers for which the terminal device uses delays and phases as a reference may be determined by the terminal device based on a capability of the terminal device, or may be indicated by the network device.

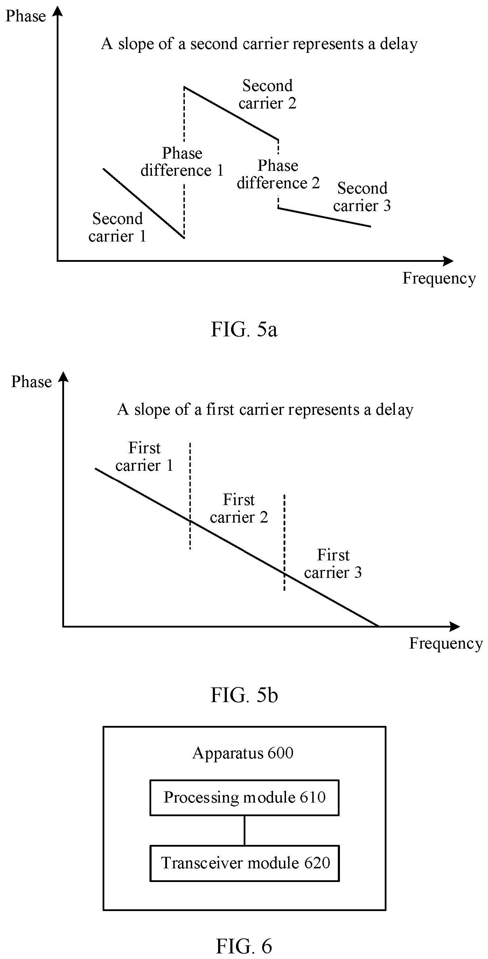

FIG. 5a and FIG. 5b are diagrams of comparison between the N first carriers and the N second carriers according to an embodiment of this application. As shown in FIG. 5a and FIG. 5b, N=3, a horizontal coordinate represents a frequency, a vertical coordinate represents a phase, and a slope of each carrier represents a delay of the corresponding carrier.

As shown in FIG. 5a, slopes of a second carrier 1, a second carrier 2, and a second carrier 3 are different from each other, that is, delays of the three second carriers are different and a delay difference between any two second carriers is greater than the first preset value; and a phase difference between any two of the three second carriers is greater than the second preset value. In this application, three first carriers shown in FIG. 5b may be obtained by adjusting the delays and phases of the second carriers.

As shown in FIG. 5b, slopes of a first carrier 1, a first carrier 2, and a first carrier 3 are the same, that is, delays of the three first carriers are the same, that is, a delay difference between any two of the three first carriers is less than the first preset value; and phases of the three first carriers are the same, that is, a phase difference between any two of the three first carriers is less than the second preset value.

Optionally, before S402, the method 400 further includes: The network device sends a downlink reference signal to the terminal device on M second carriers, where the M second carriers include the N second carriers, and M is an integer greater than or equal to N.

Correspondingly, the terminal device receives the downlink reference signal from the network device on the M second carriers; obtains N measurement results corresponding to the N second carriers, where each of the N measurement results includes a time domain offset and a frequency domain offset; determines the delays of the N second carriers based on N time domain offsets; and determines the phases of the N second carriers based on N frequency domain offsets.

The downlink reference signal may be a synchronization signal block (synchronization signal block, SSB), a tracking reference signal (tracking reference signal, TRS), a DMRS, a PTRS, a channel state information reference signal (channel state information reference signal, CSI-RS), or another reference signal. The DMRS may include a physical downlink shared channel (physical downlink shared channel, PDSCH) reference signal, a physical downlink control channel (physical downlink control channel, PDCCH) reference signal, and a physical broadcast channel (physical broadcast channel, PBCH) reference signal.

For example, the terminal device may obtain, in the following two manners, the N measurement results corresponding to the N second carriers:
Manner 1: The terminal device measures the downlink reference signal received on the M second carriers, to obtain M measurement results; and determines, in the M measurement results, the N measurement results corresponding to the N second carriers.
Manner 2: The terminal device measures the downlink reference signal received on the N second carriers, to obtain the N measurement results, where the N second carriers belong to the M second carriers.

It may be understood that, in the manner 2, the terminal device may not need to measure a downlink reference signal received on a remaining second carrier other than the N second carriers in the M second carriers. Therefore, a method for obtaining the N measurement results based on the manner 2 can reduce calculation complexity of the terminal device.

It may be further understood that the N second carriers may be determined by the terminal device in the M second carriers based on the capability of the terminal device, may be indicated by the network device to the terminal device, or may be predefined.

The time domain offset in this application is a difference between time at which the terminal device receives a downlink reference signal and time at which the network device sends the downlink reference signal, and the difference is a delay of a second carrier that carries the downlink reference signal.

The frequency domain offset in this application is a difference between a frequency at which the terminal device receives a downlink reference signal and a frequency at which the network device sends the downlink reference signal, and a phase of a second carrier that carries the downlink reference signal may be obtained by integrating the difference.

Each of the N measurement results includes one time domain offset and one frequency domain offset. Therefore, the N time domain offsets and the N frequency domain offsets may be obtained based on the N measurement results. In addition, the N measurement results correspond to the N second carriers. Therefore, one time domain offset and one frequency domain offset that correspond to each of the N second carriers may be obtained.

For example, a second carrier #1 (the second carrier #1 may be any one of the N second carriers) in the N second carriers is used as an example to describe a process in which the terminal device determines the delays of the N second carriers based on the N time domain offsets: The terminal device determines, in the N measurement results, a measurement result corresponding to the second carrier #1, and further obtains a time domain offset #1 corresponding to the second carrier #1; and determines the time domain offset #1 as a delay of the second carrier #1.

Similarly, the second carrier #1 in the N second carriers is used as an example to describe a process in which the terminal device determines the phases of the N second carriers based on the N time domain offsets: The terminal device determines, in the N measurement results, the measurement result corresponding to the second carrier #1, and further obtains a frequency offset #1 corresponding to the second carrier #1; and integrates the frequency domain offset #1 to obtain a delay of the second carrier #1.

Optionally, a delay difference between at least one of the at least two first carriers in the N first carriers and a reference carrier is less than or equal to the first preset value, and a phase difference between the at least one of the at least two first carriers in the N first carriers and the reference carrier is less than or equal to the second preset value, where the reference carrier may be one of the M second carriers.

Similar to determining the N second carriers by the terminal device, the reference carrier may also be determined by the terminal device based on the capability of the terminal device, indicated by the network device, or predefined.

As mentioned above, the M second carriers include the N second carriers. Therefore, the reference carrier may belong to the N second carriers (in other words, the reference carrier is one of the N second carriers), or may not belong to the N second carriers (in other words, the reference carrier is a remaining carrier other than the N second carriers in the M second carriers, or the reference carrier is one of remaining carriers other than the N second carriers in the M second carriers).

That the reference carrier belongs to the N second carriers may be understood as that the terminal device uses a delay and a phase of one of the N second carriers as a reference to adjust the delays and/or the phases of the N second carriers.

That the reference carrier does not belong to the N second carriers may be understood as that the terminal device uses a delay and a phase of a carrier other than the N second carriers as a reference to adjust the delays and/or the phases of the N second carriers.

It may be understood that a delay and a phase of the reference carrier may be obtained by the terminal device by measuring a downlink reference signal received on the reference carrier.

Optionally, the method 400 further includes: The terminal device obtains the delay and the phase of the reference carrier.

Example 1: When the reference signal belongs to the N second carriers, and the terminal device has obtained the delays and the phases of the N second carriers, the terminal device may directly obtain the delay of the reference carrier from the obtained delays of the N second carriers, and the phase of the reference carrier from the obtained phases of the N second carriers.

Example 2: When the reference carrier belongs to the N second carriers, but the terminal device has not obtained the delays and the phases of the N second carriers, the terminal device first measures the downlink reference signal received on the reference carrier, to obtain a measurement result, then determines the delay of the reference signal based on a time domain offset included in the obtained measurement result, and determines the phase of the reference signal based on a frequency domain offset included in the obtained measurement result.

For a manner of obtaining a delay and a phase of a carrier based on a time domain offset and a frequency domain offset in a measurement result, refer to the foregoing related descriptions. Details are not described herein again.

Example 3: When the reference signal does not belong to the N second carriers, the terminal device may obtain the delay and the phase of the reference signal in the manner shown in the example 2.

It may be understood that, if the reference carrier is indicated by the network device to the terminal device, before the terminal device obtains the delay and the phase of the reference carrier, the method 400 further includes: The network device sends first information to the terminal device, where the first information indicates the reference carrier. Correspondingly, the terminal device receives the first information from the network device.

The first information may be carried in RRC signaling or physical layer signaling (for example, downlink control information (downlink control information, DCI)).

Optionally, before the terminal device obtains the delay and the phase of the reference carrier, the method 400 further includes: The terminal device determines the reference carrier in the M second carriers based on the first information.

Optionally, when the network device sends, to the terminal device, the first information indicating the reference carrier, that the terminal device obtains the delay and the phase of the reference carrier may include: The terminal device obtains the delay and the phase of the reference carrier based on the first information.

Optionally, before the downlink reference signal is sent to the terminal device on the M second carriers, the method 400 further includes: The network device sends second information to the terminal device, where the second information indicates P second carriers, the P second carriers are used by the terminal device to send a signal, and P is an integer greater than or equal to M. Correspondingly, the terminal device receives the second information from the network device.

The P second carriers include the M second carriers. That is, the network device may send a downlink reference signal on the M second carriers in the P indicated second carriers.

Optionally, the second information may be carried in RRC signaling.

It may be understood that the second information and the first information may be simultaneously sent. For example, both the second information and the first information are carried in same RRC signaling for sending. Alternatively, the first information and the second information are separately sent. For example, the first information and the second information are carried in different RRC signaling; or the first information is carried in RRC signaling, and the second information is carried in DCI.

For example, the P carriers may be indicated by using P TCIs. For example, the network device sends the P TCIs to the terminal device by using RRC signaling. Similarly, the reference carrier may also be indicated by using a TCI. For example, the network device sends the TCI to the terminal device by using RRC signaling or physical layer signaling.

The foregoing describes in detail the method provided in embodiments of this application with reference to FIG. 1 to FIG. 5a and FIG. 5b. The following describes in detail apparatuses provided in embodiments of this application with reference to FIG. 6 to FIG. 9.

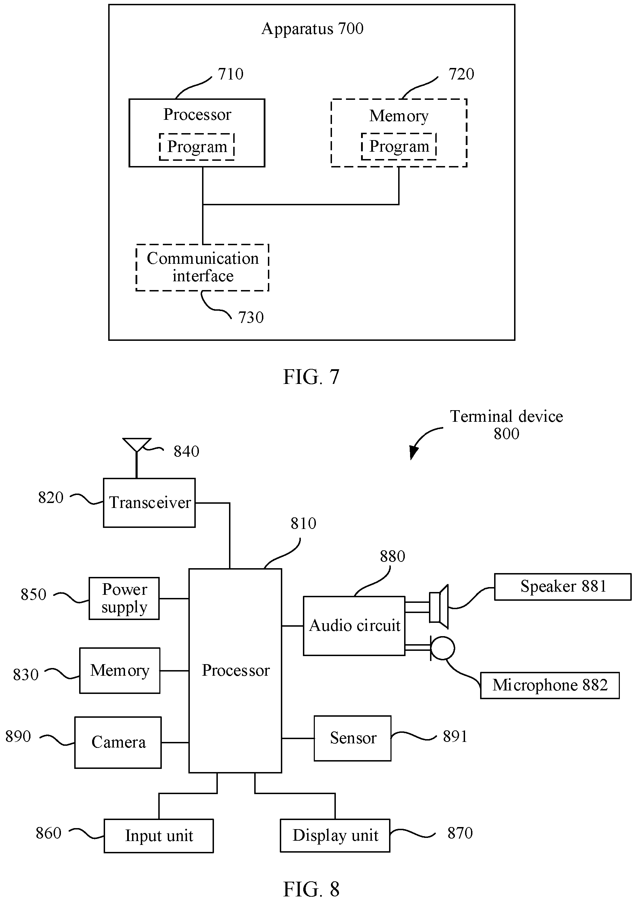

FIG. 6 and FIG. 7 are diagrams of possible apparatuses according to embodiments of this application. The apparatuses may be configured to implement functions of the terminal device or the network device in the method embodiment, and therefore can also implement beneficial effect of the method embodiment.

FIG. 6 is a block diagram of an apparatus according to an embodiment of this application. As shown in FIG. 6, the apparatus 600 includes a processing module 610 and a transceiver module 620.

In a possible design, the apparatus 600 is configured to implement functions of the terminal device in the method embodiment of FIG. 4. For example, the apparatus 600 may correspond to the terminal device in FIG. 4 or a chip used in the terminal device. When the apparatus 600 is a terminal device, the transceiver module may be a transceiver. When the apparatus 600 is a chip, the transceiver module may be an input/output circuit, where an input circuit may be used for receiving, and an output interface may be used for sending.

For example, the processing module 610 is configured to generate an uplink reference signal; and the transceiver module 620 is configured to send the uplink reference signal to a network device on N first carriers, where at least two of the N first carriers meet the following: a delay difference is less than or equal to a first preset value, and/or a phase difference is less than or equal to a second preset value, where N is an integer greater than 1.

Optionally, the transceiver module 620 is further configured to receive a downlink reference signal from the network device on M second carriers, where the M second carriers include N second carriers, and M is an integer greater than or equal to N; and the processing module 610 is further configured to: obtain N measurement results corresponding to the N second carriers, where each of the N measurement results includes a time domain offset and a frequency domain offset; determine delays of the N second carriers based on N time domain offsets; and determine phases of the N second carriers based on N frequency domain offsets.

Optionally, the transceiver module 620 is further configured to receive first information from the network device, where the first information indicates a reference carrier.

Optionally, the processing module 610 is further configured to obtain a delay and a phase of the reference carrier based on the first information.

Optionally, the transceiver module 620 is further configured to receive second information from the network device, where the second information indicates P second carriers, the P second carriers are used by the terminal device to send a signal, and P is an integer greater than or equal to M. The P second carriers include the M second carriers.

For more detailed descriptions of the processing module 610 and the transceiver module 620, directly refer to the related descriptions in the embodiment of FIG. 4. Details are not described herein.

In another possible design, the apparatus 600 is configured to implement functions of the network device in the method embodiment of FIG. 4. For example, the apparatus 600 may correspond to the network device in FIG. 4 or a chip used in the network device. When the apparatus 600 is a network device, the transceiver module may be a transceiver. When the apparatus 600 is a chip, the transceiver module may be an input/output circuit, where an input circuit may be used for receiving, and an output interface may be used for sending.

For example, the transceiver module 620 is configured to receive an uplink reference signal from a terminal device on N first carriers, where at least two of the N first carriers meet the following: a delay difference is less than or equal to a first preset value, and a phase difference is less than or equal to a second preset value, where N is an integer greater than 1; and the processing module 610 is configured to measure the uplink reference signal to obtain channel information.

Optionally, the transceiver module 620 is further configured to send a downlink reference signal to the terminal device on M second carriers, where the M second carriers include N second carriers, and M is an integer greater than or equal to N.

Optionally, the transceiver module 620 is further configured to send first information to the terminal device, where the first information indicates a reference carrier.

Optionally, the transceiver module 620 is further configured to send second information to the terminal device, where the second information indicates P second carriers, the P second carriers are used by the terminal device to send a signal, and P is an integer greater than 1. The P second carriers include the M second carriers.

For more detailed descriptions of the processing module 610 and the transceiver module 620, directly refer to the related descriptions in the embodiment of FIG. 4. Details are not described herein.

It should be noted that the apparatus 600 may include a sending module, but does not include a receiving module. Alternatively, the apparatus 600 may include a receiving module, but does not include a sending module. This may be specifically determined based on whether the foregoing solutions performed by the apparatus 600 include a sending action and a receiving action. It may be understood that because the apparatus 600 has a communication function, the apparatus 600 may also be referred to as a communication apparatus.

FIG. 7 is another block diagram of an apparatus according to an embodiment of this application. As shown in FIG. 7, the apparatus 700 includes one or more processors 710. The processor 710 may be a general-purpose processor, a dedicated processor, or the like. For example, the processor may be a baseband processor or a central processing unit. The baseband processor may be configured to process a communication protocol and communication data. The central processing unit may be configured to control the apparatus (for example, a terminal device, a network device, or a chip), execute a software program, and process data of the software program.

The processor 710 may also be sometimes referred to as a processing unit, and controls the apparatus (for example, a terminal device or a network device).

Optionally, in a design, the processor 710 may include a program (which may also be referred to as code or instructions). The program may be run on the processor 710, to enable the apparatus 700 to perform the method performed by the terminal device or the network device in the method embodiment. In another possible design, the apparatus 700 includes a circuit (not shown in FIG. 7). The circuit is configured to implement a function of the terminal device or the network device in the method embodiment.

For example, the processor 710 may be configured to execute a computer program or instructions in a memory, to implement steps performed by the terminal device or the network device in the method embodiment of FIG. 4.

Optionally, the apparatus 700 may include one or more memories 720. The memory 720 stores a program (which may also be sometimes referred to as code or instructions). The program may be run on the processor 710, to enable the apparatus 700 to perform the method performed by the terminal device or the network device in the foregoing embodiment.

Optionally, the processor 710 and/or the memory 720 may further store data. The processor and the memory may be separately disposed, or may be integrated together.

Optionally, the apparatus 700 may further include a communication interface 730. The communication interface 730 may also be sometimes referred to as a transceiver unit, a transceiver machine, a transceiver circuit, a transceiver, an input/output interface, or the like, and is configured to implement a transceiver function of the apparatus.

The communication interface 730 and the processor 710 are coupled to each other. It may be understood that the communication interface 730 may be a transceiver.

It may be understood that because the apparatus 700 has a communication function, the apparatus 700 may also be referred to as a communication apparatus.

When the apparatus 700 is configured to implement the method in FIG. 4, the processor 710 is configured to perform a function of the processing module, and the communication interface 730 is configured to perform a function of the transceiver module. Whether the communication interface 730 is used for sending or receiving may be specifically determined based on whether the apparatus 700 is configured to perform a sending action or a receiving action in the solutions performed by the apparatus 700.

When the apparatus 700 is a chip used in a terminal device, the chip implements functions of the terminal device in the method embodiment. The chip of the terminal device receives a signal from another module (for example, a radio frequency module or an antenna) in the terminal device, and the signal may be sent by a network device to the terminal device. Alternatively, the chip of the terminal device sends a signal to another module (for example, a radio frequency module or an antenna) in the terminal device, and the signal may be sent by the terminal device to a network device.

When the apparatus 700 is a chip used in a network device, the chip implements functions of the network device in the method embodiment. The chip of the network device receives a signal from another module (for example, a radio frequency module or an antenna) in the network device, and the signal may be sent by a terminal device to the network device. Alternatively, the chip of the network device sends a signal to another module (for example, a radio frequency module or an antenna) in the network device, and the signal may be sent by the network device to a terminal device.

It may be understood that when the apparatus 700 is a terminal device or a network device, the communication interface 730 may be a transceiver, and may specifically include a transmitter and a receiver. The transmitter is configured to send a signal, and the receiver is configured to receive a signal. When the apparatus 700 is a chip used in the terminal device or the network device, the communication interface 730 may be an input/output circuit. An input circuit may be used for receiving, and an output interface may be used for sending.

FIG. 8 is a diagram of a structure of a terminal device according to an embodiment of this application. As shown in FIG. 8, the terminal device 800 may be used in the system shown in FIG. 1, to perform functions of the terminal device in the method embodiment. As shown in the figure, the terminal device 800 includes a processor 810 and a transceiver 820. Optionally, the terminal device 800 further includes a memory 830. The processor 810, the transceiver 820, and the memory 830 may communicate with each other via an internal connection path, to transfer a control signal and/or a data signal. The memory 830 is configured to store a computer program. The processor 810 is configured to invoke the computer program from the memory 830 and run the computer program, to control the transceiver 820 to receive/send a signal. Optionally, the terminal device 800 may further include an antenna 840, configured to send, by using a radio signal, uplink data, an uplink reference signal, or uplink control signaling output by the transceiver 820.

The processor 810 and the memory 830 may be integrated into one processing apparatus. The processor 810 is configured to execute program code stored in the memory 830 to implement the foregoing functions. During specific implementation, the memory 830 may alternatively be integrated into the processor 810, or may be independent of the processor 810. The processor 810 may correspond to the processing module in FIG. 6 or the processor in FIG. 7.

The transceiver 820 may correspond to the transceiver module in FIG. 6 or the communication interface in FIG. 7, and may also be referred to as a transceiver unit. The transceiver 820 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the terminal device 800 shown in FIG. 8 can implement steps related to the terminal device in the method embodiment of FIG. 4. Operations and/or functions of the modules in the terminal device 800 are separately for implementing corresponding procedures in the method embodiment. For details, refer to the descriptions in the method embodiment. To avoid repetition, detailed descriptions are properly omitted herein.

The processor 810 may be configured to perform an action that is implemented inside the terminal device and that is described in the method embodiment. The transceiver 810 may be configured to perform an action of sending to or receiving from the network device by the terminal device that is described in the method embodiment. For details, refer to the descriptions in the method embodiment. Details are not described herein again.

Optionally, the terminal device 800 may further include a power supply 850, configured to supply power to various components or circuits in the terminal device 800.

In addition, to implement more functions of the terminal device, the terminal device 800 may further include one or more of an input unit 860, a display unit 870, an audio circuit 880, a camera 890, a sensor 891, and the like, and the audio circuit may further include a speaker 881, a microphone 882, and the like.

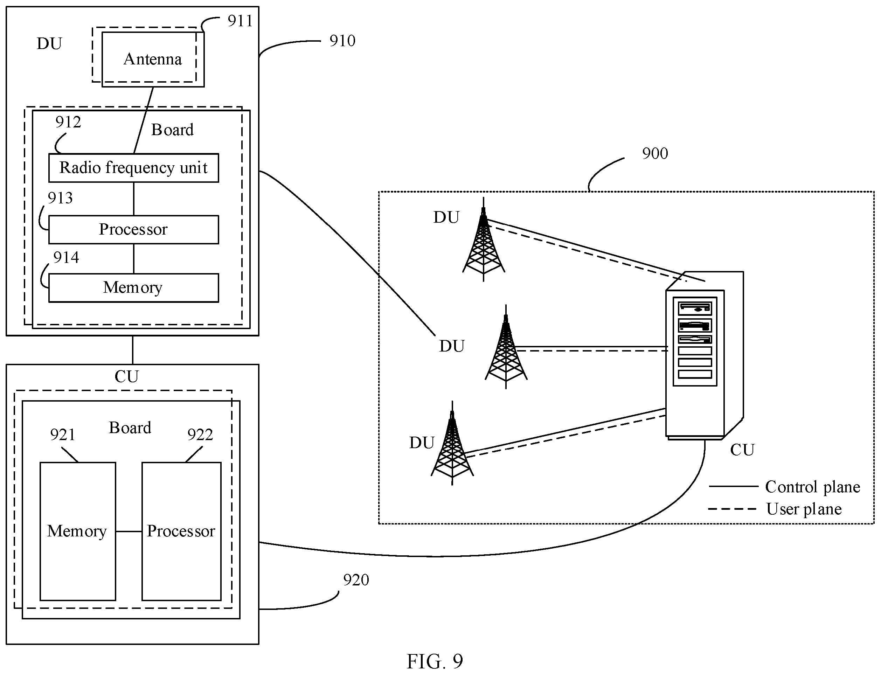

FIG. 9 is a diagram of a structure of a radio access network device according to an embodiment of this application, for example, may be a diagram of a structure of a base station. The base station 900 may be used in the system shown in FIG. 1, to perform functions of the network device in the method embodiment. As shown in the figure, the base station 900 may include one or more of the following: one or more DUs+RUs 910 and one or more CUs 920. The CU 920 may communicate with a next generation core network (next generation core, NG core). The DU may include at least one antenna 911, at least one radio frequency unit 912, at least one processor 913, and at least one memory 914. The DU part is mainly configured to receive and send radio frequency signals, perform conversion between a radio frequency signal and a baseband signal, and perform partial baseband processing. The CU 920 may include at least one processor 922 and at least one memory 921. The CU 920 and the DU may communicate with each other through an interface. A control plane (control plane, CP) interface may be Fs-C, for example, F1-C. A user plane (user plane, UP) interface may be Fs-U, for example, F1-U. The DU and the RU may cooperate to jointly implement a function of a physical (physical, PHY) layer. One DU may be connected to one or more RUs. Functions of the DU and the RU may be configured into a plurality of manners based on designs. For example, the DU is configured to implement a baseband function, and the RU is configured to implement an intermediate radio frequency function. For another example, the DU is configured to implement a higher-layer function of the PHY layer, and the RU is configured to implement a lower-layer function and a radio frequency function of the PHY layer. The higher-layer function of the PHY layer may include a part of functions of the PHY layer, and the part of functions are closer to a MAC layer. The lower-layer function of the PHY layer may include another part of functions of the PHY layer, and the part of functions are closer to an intermediate radio frequency side.

The CU 920 is mainly configured to perform baseband processing, control the base station, and perform another operation. The DU and the CU 920 may be physically disposed together, or may be physically separated, that is, in a distributed base station. The CU 920 is a control center of the base station, may correspond to the processing module in FIG. 6 or the processor in FIG. 7, may also be referred to as a processing unit, and is mainly configured to complete a baseband processing function. For example, the CU 920 may be configured to control the base station to perform the operation procedure related to the access network device in the method embodiment.

Specifically, baseband processing on the CU and the DU may be divided based on a protocol layer of a wireless network. For example, functions of a packet data convergence protocol (packet data convergence protocol, PDCP) layer and a protocol layer above the PDCP layer are set on the CU, and functions of protocol layers, such as an RLC layer and a MAC layer, below the PDCP layer are set on the DU. For another example, the CU implements functions of an RRC layer and a PDCP layer, and the DU implements functions of an RLC layer, a MAC layer, and a PHY layer.

In addition, optionally, the base station 900 may include one or more radio frequency units (RUs), one or more DUs, and one or more CUs. The DU may include at least one processor 913 and at least one memory 914, the RU may include at least one antenna 911 and at least one radio frequency unit 912, and the CU may include at least one processor 922 and at least one memory 921.

In an instance, the CU 920 may include one or more boards, and a plurality of boards may jointly support a radio access network (for example, a 5G network) of a single access mode, or may separately support radio access networks (for example, an LTE network, a 5G network, or another network) of different access modes. The memory 921 and the processor 922 may serve one or more boards. In other words, a memory and a processor may be separately disposed on each board. Alternatively, a plurality of boards may share a same memory and a same processor. In addition, a necessary circuit may be further disposed on each board. The DU may include one or more boards, and a plurality of boards may jointly support a radio access network (for example, a 5G network) of a single access mode, or may separately support radio access networks (for example, an LTE network, a 5G network, or another network) of different access modes. The memory 914 and the processor 913 may serve one or more boards. In other words, a memory and a processor may be separately disposed on each board. Alternatively, a plurality of boards may share a same memory and a same processor. In addition, a necessary circuit may be further disposed on each board.

It should be understood that the base station 900 shown in FIG. 9 can implement each process related to the network device in the method embodiment of FIG. 4. Operations and/or functions of the modules in the base station 900 are separately for implementing corresponding procedures in the method embodiment. For details, refer to the descriptions in the method embodiment. To avoid repetition, detailed descriptions are properly omitted herein.

It should be understood that the base station 900 shown in FIG. 9 is merely a possible architecture of the radio access network device, and should not constitute any limitation on this application. The method provided in this application is applicable to a network device in another architecture, for example, a radio access network device including a CU, a DU, and an AAU. A specific architecture of the radio access network device is not limited in this application.

It should be understood that FIG. 9 is merely an example rather than a limitation, and the radio access network device may not depend on the structure shown in FIG. 9. For example, the radio access network device may also include an AAU, and may further include a CU and/or a DU; or the radio access network device may also include a BBU, and may further include an adaptive radio unit (adaptive radio unit, ARU). This is not limited in this application.

The CU and/or the DU may be configured to perform an action that is implemented inside the radio access network device and that is described in the method embodiment. The AAU may be configured to perform an action of sending to or receiving from the terminal device by the radio access network device that is described in the method embodiment. For details, refer to the descriptions in the method embodiment. Details are not described herein again.

It should be noted that the method embodiment may be applied to a processor, or implemented by a processor. The processor may be an integrated circuit chip with a signal processing capability. In an implementation process, the steps in the method embodiment may be completed by using a hardware integrated logic circuit in the processor or by using instructions in a form of software.

The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or any combination thereof. The general-purpose processor may be a microprocessor, or may be any conventional processor or the like.

The steps of the method disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps of the method in combination with hardware of the processor.

A memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification includes but is not limited to these memories and any memory of another appropriate type.

The method provided in the foregoing embodiment may be completely or partially implemented by software, hardware, firmware, or any combination thereof. When software is used for implementation, the method may be completely or partially implemented in a form of a computer program product. The computer program product may include one or more computer instructions. When the computer program instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic disk), an optical medium (for example, a DVD), a semiconductor medium (for example, a solid-state disk (solid-state disk, SSD)), or the like.

An embodiment of this application further provides a computer-readable medium. The computer-readable medium stores a computer program. When the computer program is executed by a computer, functions in the method embodiment are implemented.

An embodiment of this application further provides a computer program product including instructions. When the computer program product is executed by a computer, functions in the method embodiment are implemented.

An embodiment of this application further provides a communication system. The communication system includes a terminal device and a network device.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the method embodiment. Details are not described herein again.

In several embodiments provided in this application, it should be understood that the disclosed system, apparatuses, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, for example, a USB flash drive, a removable hard disk, a read-only memory, a random access memory, a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
generating an uplink reference signal; and
sending the uplink reference signal to a network device on N first carriers, wherein at least two of the N first carriers meet the following: a delay difference is less than or equal to a first preset value, and/or a phase difference is less than or equal to a second preset value, wherein N is an integer greater than 1.

2. The method according to claim 1, wherein any two of the N first carriers meet the following: a delay difference is less than or equal to the first preset value, and/or a phase difference is less than or equal to the second preset value.

3. The method according to claim 1 or 2, wherein the N first carriers are obtained by adjusting delays and/or phases of N second carriers.

4. The method according to claim 3, wherein the method further comprises:
receiving a downlink reference signal from the network device on M second carriers, wherein the M second carriers comprise the N second carriers, and M is an integer greater than or equal to N;
obtaining N measurement results corresponding to the N second carriers, wherein each of the N measurement results comprises a time domain offset and a frequency domain offset;
determining the delays of the N second carriers based on N time domain offsets; and
determining the phases of the N second carriers based on N frequency domain offsets.

5. The method according to claim 4, wherein a delay difference between at least one of the at least two first carriers and a reference carrier is less than or equal to the first preset value, and a phase difference between the at least one of the at least two first carriers and the reference carrier is less than or equal to the second preset value, wherein the reference carrier is one of the M second carriers.

6. The method according to claim 5, wherein the method further comprises:
receiving first information from the network device, wherein the first information indicates the reference carrier.

7. The method according to claim 6, wherein the method further comprises:
obtaining a delay and a phase of the reference carrier based on the first information.

8. The method according to claim 6 or 7, wherein the first information is carried in radio resource control RRC signaling or physical layer signaling.

9. The method according to any one of claims 4 to 8, wherein the method further comprises:
receiving second information from the network device, wherein the second information indicates P second carriers, the P second carriers are used by a terminal device to send a signal, and P is an integer greater than or equal to M, wherein
the P second carriers comprise the M second carriers.

10. The method according to claim 9, wherein the second information is carried in RRC signaling.

11. The method according to any one of claims 1 to 10, wherein sending on the N first carriers is performed simultaneously or in a time-division manner.

12. A communication method, comprising:
receiving an uplink reference signal from a terminal device on N first carriers, wherein at least two of the N first carriers meet the following: a delay difference is less than or equal to a first preset value, and/or a phase difference is less than or equal to a second preset value, wherein N is an integer greater than 1; and
measuring the uplink reference signal to obtain channel information.

13. The method according to claim 12, wherein any two of the N first carriers meet the following: a delay difference is less than or equal to the first preset value, and/or a phase difference is less than or equal to the second preset value.

14. The method according to claim 12 or 13, wherein the N first carriers are obtained by adjusting delays and/or phases of N second carriers.

15. The method according to claim 14, wherein the method further comprises:
sending a downlink reference signal to the terminal device on M second carriers, wherein the M second carriers comprise the N second carriers, and M is an integer greater than or equal to N.

16. The method according to claim 15, wherein a delay difference between at least one of the at least two first carriers and a reference carrier is less than or equal to the first preset value, and a phase difference between the at least one of the at least two first carriers and the reference carrier is less than or equal to the second preset value, wherein
the reference carrier is one of the M second carriers.

17. The method according to claim 16, wherein the method further comprises:
sending first information to the terminal device, wherein the first information indicates the reference carrier.

18. The method according to claim 17, wherein the first information is carried in radio resource control RRC signaling or physical layer signaling.

19. The method according to any one of claims 15 to 18, wherein the method further comprises:
sending second information to the terminal device, wherein the second information indicates P second carriers, the P second carriers are used by the terminal device to send a signal, and P is an integer greater than 1, wherein
the P second carriers comprise the M second carriers.

20. The method according to claim 19, wherein the second information is carried in RRC signaling.

21. The method according to any one of claims 12 to 20, wherein receiving on the N first carriers is performed simultaneously or in a time-division manner.

22. A communication apparatus, comprising one or more functional units, configured to implement the method according to any one of claims 1 to 11, or configured to implement the method according to any one of claims 12 to 21.

23. A communication apparatus, comprising a processor, wherein the processor is configured to execute program code, to enable the communication apparatus to implement the method according to any one of claims 1 to 11, or implement the method according to any one of claims 12 to 21.

24. A computer-readable storage medium, wherein the computer-readable storage medium stores a computer program, and when the computer program is executed by a processor, the method according to any one of claims 1 to 11 is performed, or the method according to any one of claims 12 to 21 is performed.

25. A computer program product, comprising a computer program, wherein when the computer program is run, the method according to any one of claims 1 to 11 is performed, or the method according to any one of claims 12 to 21 is performed.

26. A communication system, comprising a terminal device and a network device, wherein the terminal device is configured to implement the method according to any one of claims 1 to 11, and the network device is configured to implement the method according to any one of claims 12 to 21.
